# EUROPEAN PATENT SPECIFICATION

(11) **EP 2 101 936 B1**
(45) Date of publication and mention of the grant of the patent: **22.05.2013**
(21) Application number: 07706224.8
(22) Date of filing: 15.01.2007
(51) Int. Cl.: B21D 53/30, B23Q 3/00, B60B 3/06, B23B 31/16, B23B 31/18

(54) **CHUCK AND PROCESS FOR MANUFACTURING A VEHICLE WHEEL RIM EMPLOYING SAID CHUCK**
SPANNFUTTER UND VERFAHREN ZUR HERSTELLUNG EINER FAHRZEUGFELGE UNTER EINSATZ DES SPANNFUTTERS
MANDRIN ET PROCESSUS DE FABRICATION DE JANTE DE ROUE DE VÉHICULE UTILISANT CE MANDRIN

(43) Date of publication of application: 23.09.2009
(73) Proprietor: Hayes Lemmerz S.r.l., 25020 Dello BS (IT)
(72) Inventor: AFELTRA, Umberto, I-25064 Gussago, Brescia (IT)
(74) Representative: Leihkauf, Steffen Falk
(86) International application number: PCT/IT2007/000025
(87) International publication number: WO 2008/087668

(56) References cited:
- EP-A2- 0 290 896
- WO-A-2005/102737
- DE-U1-202005 004 538
- DE-U1-202006 008 949
- JP-A- 9 066 406
- JP-A- 9 066 410
- JP-A- 2004 122 320
- US-A- 3 420 538
- US-A- 5 292 182
- US-A- 5 820 137
- US-A- 6 126 174
- US-A1- 2003 127 810
- US-A1- 2003 160 402
- US-A1- 2005 120 557
- US-B1- 6 272 748

## Description

The present invention relates to the technical field of vehicle wheel rims.

Typically, a vehicle wheel rim comprises a portion having a substantially annular shape and further comprises a disc joined to this annular portion. The annular portion comprises a region that is called the well, which is suitable for coupling to a tyre.

The disc further comprises a plurality of openings corresponding to holes (eyelets) that are suitable to be engaged with means (for example, screws) for fixing the wheel rim to the vehicle.

As known to those skilled in the art, the manufacturing of vehicle wheel rims implies a series of operations comprising, for example, a mould casting operation for modelling a first shape of the so-called blank wheel rim, and further subsequent working operations which lead to the manufacturing of the finished wheel rim. A good number of these operations are workings of the wheel rim annular portion, which normally provide the wheel rim to be rotated about an axis of rotation.

The working of the annular portion of a wheel rim is usually carried out by mounting the wheel rim on a chuck integral to the rotating shaft of a more complex processing machine, such as a lathe.

An operation for centring the wheel rim on the chuck and a subsequent locking operation are required to mount the wheel rim to the chuck. These are quite delicate operations, because an even processing of the annular portion and a proper operation of the machines used depend thereon.

According to a conventional method, brackets are provided for centring the wheel rim on the chuck, which extend from a chuck base, parallel to the rotation axis. These brackets are suitable to be introduced within the holes for fixing the wheel rim to the vehicle. After centring, the wheel rim is locked to the chuck by suitable jaws.

The centring and locking operations are presently influenced by the type of wheel rim to be worked. Different types of wheel rims correspond to categories of wheel rims having different radius/diameter and different disc structure (distribution and number of vehicle fixing holes).

This currently requires using a dedicated chuck and/or lathe for each different type of wheel rim, i.e. having brackets being arranged such as to match the holes of the particular wheel rim to be processed.

A solution of this type requires considerable costs, both for purchasing individual machines, and for the maintenance of the latter, and for the installation space thereof. A chuck for centring a blank wheel rim corresponding to the preamble of claim 1 is known from DE-U-202005004538. Other examples of known chucks for centring a wheel rim and known processes for manufacturing a vehicle wheel rim are disclosed in documents DE-U-202206008949, JP-A-09066406, EP-A-0290896, US-A-6126174, US-A-5820137 and US-A-2003/127810.

The object of the present invention is to provide an alternative chuck that is capable of overcoming the drawbacks described above, and particularly, suitable to allow processing also different types of wheel rims, preferably, in a shorter time and at low costs.

This object is achieved by the chuck such as described in the annexed first claim. Preferred embodiments of said process are as defined in claims 2-10.

In another embodiment, the support base is substantially orthogonal to the first reference axis and the respective radial direction in which each of said at least two orientation elements extends develops parallel to the support base. In another embodiment two of said orientation elements have respective radial directions that are not aligned relative to each other. In another embodiment, at least one of the orientation elements is fixed relative to the support base in the radial direction. In another embodiment, said at least two orientation elements are suitable to be engaged with the first orientation means of the wheel rim according to a geometric coupling. In another embodiment, the support base comprises means for fixing to an operation machine. In another embodiment, said first reference axis is an axis of rotation of the support base and said operating machine is a lathe, said at least two orientation elements are suitable to be engaged with the first orientation elements of the wheel rim such that the rotary movement of the chuck is transferred to the wheel rim. In another embodiment, said at least one of the orientation elements is radially moveable relative to the support base. In another embodiment, said at least one radially movable orientation element is mounted to a sliding saddle within a seat with which the support base is provided.

A further object of the present invention is also a process for manufacturing a wheel rim employing said chuck such as described in the annexed claim 11. Preferred embodiments of said process are as defined in claims 12-15.

In another embodiment, said second reference axis is an axis of rotation of the wheel rim when applied to the vehicle; the first orientation means being distributed along a peripheral circular edge that is substantially perpendicular to said second reference axis. In another embodiment, said first orientation means comprise at least two notches defined in said edge, which are suitable to be engaged with said at least two orientation elements of the chuck. In another embodiment, the step of providing a wheel rim comprises a moulding operation for obtaining said wheel rim. In another embodiment, the moulding operation is carried out using a mould comprising shaping elements extending from a middle portion of said mould and a groove defined in a peripheral portion of the mould, said groove having a plurality of partition walls distributed therein, such that the groove and said partition walls match the edge and said at least two notches, respectively. In another embodiment, the wheel rim comprises a disc and an annular portion; the peripheral edge being joined to the disc in a peripheral region of said disc. In another embodiment, the wheel rim further comprises a plurality of spokes radially extending between said annular portion and a hub, said plurality of spokes being suitable to connect said annular portion to the hub in the proximity of a flange. In another embodiment, the step of locking is carried out by the stop element that can be rotated between a first position in which it allows positioning and centring the wheel rim on the chuck and a second position in which it is engaged with a portion of the wheel rim such as to constrain the latter to move along the first reference axis of the chuck, said stop element being mounted to the saddle. In another embodiment, the chuck is mounted on a lathe, said lathe being suitable to rotate the chuck about the first reference axis. In another embodiment, the step of working comprises stock removal via a first turning operation. In another embodiment, the step of removing the first orientation means further comprises the operation of fixing the wheel rim to a further chuck of a second lathe by means of fixing means suitable to be engaged with the hub of the wheel rim and a further stock removal by means of a second turning. In another embodiment, the wheel rim further comprises a plurality of holes suitable for allowing the wheel rim to be fixed to a vehicle and/or the passage of a tyre inflating valve. In another embodiment, the wheel rim is made of a material to be worked through stock removal.

Further characteristics and the advantages of the invention will appear more clearly from the detailed description below of a preferred embodiment thereof, which has been given by way of illustration and should be not considered as limiting with relation to the annexed figures, in which:
- Fig. 1 shows a perspective view of a chuck according to an example of the invention;
- Fig. 2 shows a perspective view of a blank vehicle wheel rim according to an example of the invention;
- Fig. 3 shows a partial side view of a geometric coupling between the chuck in Fig. 1 and the blank wheel rim in Fig. 2;
- Fig. 4 shows a simplified diagram listing a sequence of processing operations included in a manufacturing process according to an example of the invention;
- Fig. 5 shows a perspective view of a detail of a mould to be used for obtaining the blank wheel rim in Fig. 2;
- Fig. 6 and 7 show a perspective view of a chuck according to further examples of the invention.

In the figures, equal or similar elements will be designated with the same numerals.

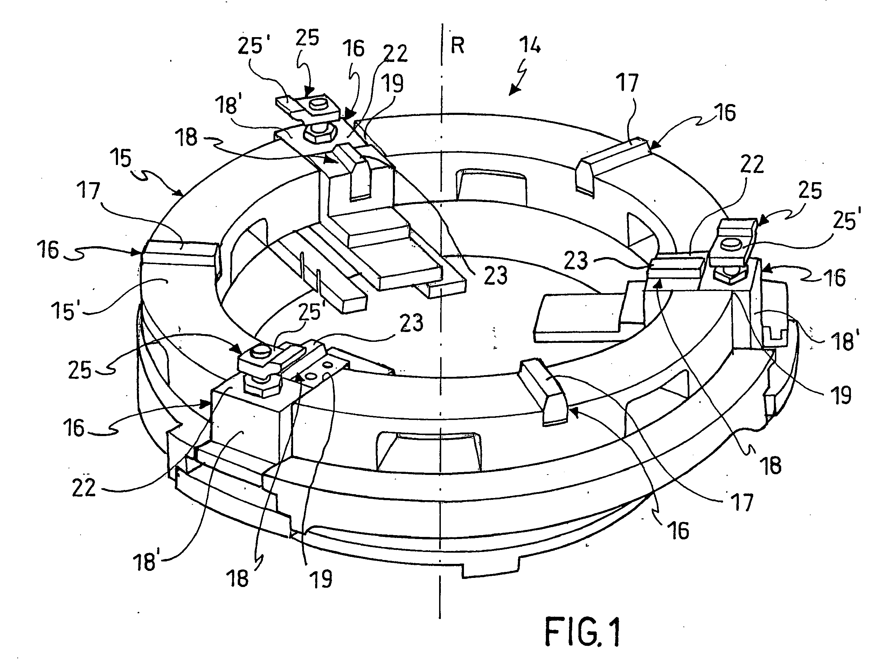

With reference to Fig. 1, an example of a chuck 14 for centring a vehicle wheel rim is described in accordance with the present invention.

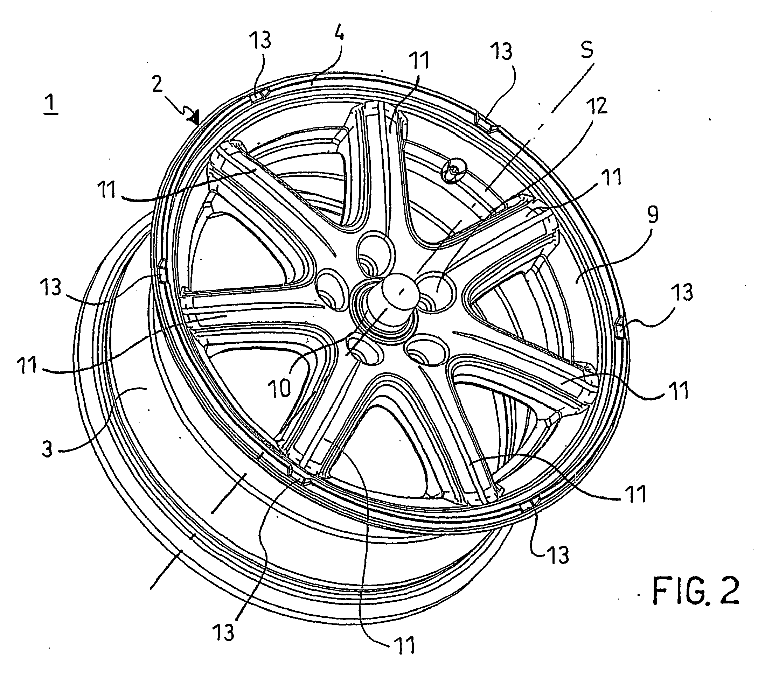

This chuck 14 comprises a support base 15 to be rotated about a first reference axis R. The support base 15 is substantially orthogonal to the first reference axis R and comprises an annular structure having an upper face 15' on which orientation elements 16 are distributed, which are intended, as will be described below with reference to Fig. 2, to be engaged with respective first orientation means 13 associated with a blank wheel rim 1 thus allowing the wheel rim 1 to be centred on the chuck 14. The orientation elements 16 extend in respective radial directions that develop parallel to the support base 15 and are centred on the first reference axis R. By "radial direction" is meant a direction substantially perpendicular to the first reference axis R.

Preferably, and in a non-limiting manner, in the example described herein, the orientation elements 16 are six and are distributed on the upper face 15' such as to be arranged at 60° angular distance from each other. Particularly, the orientation elements 16 comprise a plurality of fixed orientation elements 17 relative to the support base in the radial direction and a plurality of radially movable orientation elements 18.

Advantageously, according to the example in Fig. 1, the orientation elements 17 are three, and have respective radial directions having an angular distance of 120° from each other. Similarly, the radially movable orientation elements 18 are three and have a mutual angular distance of 120°. Particularly, it may be seen how each fixed orientation element 17 is comprised between two radially movable orientation elements 18 and vice versa.

Referring back to the broadest terminology used above, the orientation elements 16, as will be also stated herein below, extend in the radial direction by being centred on the first reference axis R by such a length as to allow, alternatively to the wheel rim 1, the chuck to be engaged with second orientation means that are associated with at least one further wheel rim that is of a different type from wheel rim 1 and that can be centred on the chuck. By different types of wheel rims is meant, as it is understood by those skilled in the art, wheel rims having different dimensional characteristics (such as, for example, outer diameter or radius, usually expressed in inches) and/or different shape characteristics (such as, for example, the number, position or shape of the vehicle fixing holes and/or number of spokes).

Still according to the exemplary embodiment described herein, the fixed orientation elements 17 and the radially movable orientation elements 18 advantageously comprise ribs designated with numerals 17 and 23, respectively, in relief on the upper face 15' of the support base 15. The ribs 17 and 23 preferably have a trapezoid profile, and have for example, a length in the radial direction ranging between 3 and 8 cm, such as to allow the engagement with wheel rims having a diameter/radius ranging between 15 and 18 inches (or 17-20 inches).

With reference to the radially movable orientation elements 18 in Fig. 1, it should be noted that each of them is mounted to a sliding saddle 18' within a respective seat 19 provided within the support base 15. The seats 19, being associable to the respective movable orientation elements 18, have a radial direction with centre on the first reference axis R and are defined within the annular structure such as to have a mutual angular distance of 120°.

It should also be noted that the chuck 14 can comprise suitable indentations (not shown in the figures), which are formed on the surface of each seat 19, and suitable to be snugly engaged with respective notches defined on the lower surface of each sliding saddle 18'. In the steady state, when the chuck is rotating, the engagement between indentations and respective notches results to be particularly advantageous, in terms of safety conditions, as it prevents each sliding saddle 18' to move outwardly in the radial direction, due to the centrifuge force, thus consequently releasing the hold by the chuck 14 on the wheel rim 1 to be processed. Furthermore, the engagement between indentations and notches is a mechanical constraint even when the hydraulic pressure for coupling the blank wheel rim 1 to the chuck 14 is released. From an operative point of view, when each sliding saddle 18' is required to be moved within the seat 19 thereof, the sliding saddles 18' are only required to be lifted, thus releasing the coupling between indentations and notches.

With further reference to the support base 15, it should be observed that said base 15 further comprises locking means 25 to be used for locking the wheel rim 1 to the chuck 14. In the example in Fig. 1, the locking means 25 comprise a stop element 25' being mounted on the saddle 22. Consequently, the stop element 25' results to be movable in the radial direction and furthermore, it preferably results to be rotatable such as to be engaged with a wheel rim portion, thus locking the movement thereof. More particularly, according to the example described herein, the stop element 25' is rotatable between a first position in which it allows positioning and centring the wheel rim 1 onto the support base and a second position in which it is engaged with the wheel rim portion such as to advantageously prevent the latter from shifting along the first reference axis R.

As will be explained herein below, the saddles 22 and the respective stop elements 25' can be automatically controlled by means of a programmable control unit, such as a Programmable Logic Controller (PLC) for moving and positioning the locking means as a function of, for example, the radius or diameter of the wheel rim 1.

With general reference to the chuck 14 in Fig. 1, and as known by those skilled in the art, said chuck provides fitting means (not shown in the figures) for mounting the chuck on a mechanical equipment, such as a lathe, capable of rotate the chuck about the first reference axis R.

With particular reference to Fig. 2, a blank wheel rim 1 is illustrated, for example of the type to be used in a car wheel.

The blank wheel rim 1, when applied to a vehicle, rotates about an axis of rotation. In Fig. 2, the axis of rotation of the wheel rim is designated with a second reference axis S.

The wheel rim 1 includes a disc 2, an annular portion or ring 3 and first orientation means 13 distributed along a peripheral circular edge 4 that is substantially perpendicular to the second reference axis S. More particularly, said peripheral edge 4 results to be joined to the disc 2 at a peripheral region of said disc.

In greater detail, the wheel rim 1 further comprises a plurality of spokes 11 radially extending between the annular portion 3 and a hub 10 at a flange 9. As known to those skilled in the art, the hub 10 is used to connect the wheel rim 1 to an axis of the car (not shown in the figure), while the flange 9, which extends inwardly of the ring 3 and at the same time faces outwards when the wheel rim is mounted to the car, contributes to define the aesthetic appearance of the wheel rim. Furthermore, a plurality of holes are distributed at the hub 10, which can be used for fixing the wheel rim to the vehicle, while an inflating valve hole of a tyre associated with the wheel rim is formed at the flange 9.

In the exemplary wheel rim in Fig. 2, the first orientation means 13 comprise notches being defined on the peripheral edge 4. Particularly, the notches 13, similarly to the orientation elements 16 associated with the chuck 14 are distributed such as to have a mutual angular distance of 60° and are defined such as to have a further trapezoid-shaped profile.

It should be noted that the aspects concerning the arrangement and shape of the notches of the peripheral edge 4 allow the wheel rim 1 to be mounted to the chuck of the example described above and, as will be detailed below, to be worked in a manufacturing process using this chuck.

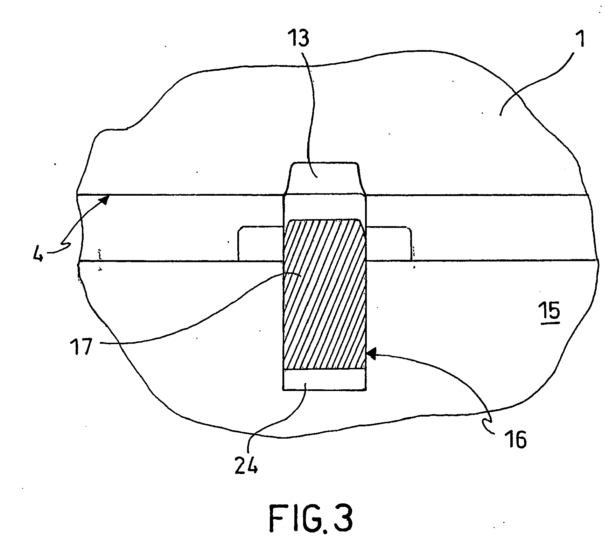

Particularly, with reference now to Fig. 3, when the wheel rim 1 is positioned on the chuck 14, the first orientation means 13 are such as to be engaged by being geometrically coupled to the orientation elements 16. A further aspect of the exemplary chuck described in accordance with the invention is also shown in Fig. 3. The rib 17 associated with the support base 15 is housed in a further seat 24 that is provided with resilient means (not shown in the figure), for example a spring, such as to apply a thrust of the rib 17 to facilitate the engagement of the latter with the respective notch 13. In the example described above, what has been stated above for the ribs 17, associated to the fixed orientation means 17 of the chuck, also applies to the ribs 23 associated with the radially movable orientation elements 18.

It should be also observed that, advantageously, each spring is provided with a respective position sensor therein, which is suitable to generate an electric signal indicating that the spring has been pressed. Particularly, the position sensors that are distributed in each of the springs, result to be preferably operatively serially connected to each other such as to provide, when the wheel rim 1 is properly positioned on the chuck 14, a first electric control signal to a transmitter (not shown) that is mounted on the chuck 14 and suitable to send a second electric control signal to a respective receiving antenna. This receiving antenna can be preferably positioned outside the chuck and results to be operatively connected to the programmable control unit. The control unit, on the basis of the second electric signal received, is capable of completing the centring and locking of the wheel rim 1 on the chuck 14. It should be further noted that, advantageously, only some of the springs can be provided with the respective position sensor thus allowing a reduction in the chuck manufacturing costs, while ensuring the same operating reliability.

Advantageously, the aspect underlined in the preceding paragraph allows obtaining, as will be further discussed below, the torque such as to bring the wheel rim 1 in rotation, when the chuck 14 is being rotated.

While a particular example of wheel rim 1 has been described with reference to Fig. 2, the considerations set forth below also apply to different types of wheel rims, and particularly, they apply also when the wheel rim is used in a different type of vehicle (such as a motorcycle), is made of a different material (such as magnesium, or titanium, or more generally any light alloy suitable for making wheel rims), has a different structure.

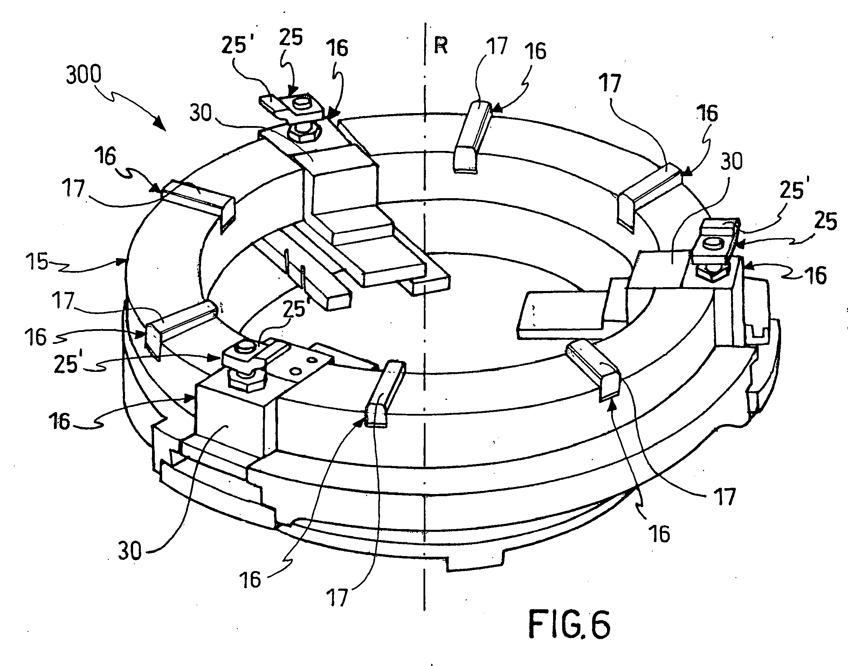

Referring now to Fig. 6, a second example of chuck is described according to the invention.

This chuck, which is designated with numeral 300, comprises, similarly to the chuck in Fig. 1, a support base 15 that can be rotated about a first reference axis R. The support base 15 is substantially orthogonal to the first reference axis R and comprises an annular structure having an upper face 15' on which orientation elements 16 are distributed, which are intended, similarly to those described above with reference to Fig. 1, to be engaged with the respective first orientation means 13 associated with the blank wheel rim 1 thus allowing the latter to be centred on the chuck 300. It should be understood that the orientation elements 16 extend in respective radial directions developing parallel to the support base 15 and being centred on the first reference axis R.

In this second example described herein, the orientation elements 16 are nine and comprise a plurality of orientation elements 17 that are fixed relative to the support base 15 and a plurality of radially movable orientation elements 30. As shown in Fig. 6, the fixed orientation elements 17 are six and have respective radial directions having an angular distance of 60° from each other. The radially movable orientation elements 30 are three and have respective radial directions having an angular distance of 120° from each other. Particularly, it may be noted that each movable orientation element 30 is comprised between two fixed orientation elements 17.

These fixed orientation elements 17 advantageously comprise ribs in relief on the upper face 15' of the support base 15. Similarly to what has been stated for the example above, the ribs have such a profile and length as to allow, alternatively to the wheel rim 1, the chuck 300 to be engaged with the second orientation means associated with at least one further wheel rim that is of a different type from the wheel rim 1 and that can be centred on the chuck.

With reference to the movable orientation elements 30 in Fig. 6, it should be noted that each of them is mounted to a respective sliding saddle within a respective seat being provided in the support base 15. The saddles, seats and indentation-notch engagement between saddles and seats are entirely similar to those described above with reference to the first example of chuck.

In this second exemplary embodiment, it should be noted that the movable orientation elements 30 are not provided with ribs and, particularly, they comprise locking means 25 and stop elements 25' (similar to those already described with reference to Fig. 1) that can be used for locking the wheel rim 1 to the chuck 300.

Similarly to the first example described herein, each rib 17 associated with the support base 15 is housed in a further seat 24 provided with resilient means (not shown in the figure), for example a spring, which is suitable for applying a thrust of the rib 17 in order to facilitate the engagement of the latter with the respective notch 13. Also in this example, advantageously, each spring is provided with the respective position sensor therein, in order to provide, when the wheel rim 1 is properly positioned on the chuck 300, the first electric control signal to the transmitter (not shown), mounted to the chuck 300, which is suitable for sending the second electric control signal to the respective receiving antenna that can be positioned, for example, outside the chuck and operatively connected to the PLC controller. The latter, based on the second electric signal received, is capable of completing the centring and locking of the wheel rim 1 to the chuck 300. It should be noted that the generation of the first electric signal can be obtained by providing only some of the springs used in the exemplary chuck described above with the respective position sensor.

As will be explained herein below for the first example, also in this second exemplary chuck, the saddles and respective stop elements 25' can be automatically controlled, by means of the PLC controller, for moving and positioning the locking means as a function of, for example, the radius or diameter of the wheel rim 1.

In this second exemplary embodiment, the orientation and centring of the wheel rim 1 on the chuck 300 is ensured by the ribs 17 of the chuck 300 being coupled with the notches 13 of the wheel rim 1. The locking of the wheel rim 1 on the chuck 300 is, on the other hand, allowed by the movable orientation elements 30 radially sliding to contact the wheel rim 1 and by the locking elements 25'.

It should be noted that, similarly to the first chuck described herein, and as known to those skilled in the art, the chuck 300 provides fitting means (not shown in the figures) for mounting to a lathe or other operating machine capable of rotating the same about the first reference axis R.

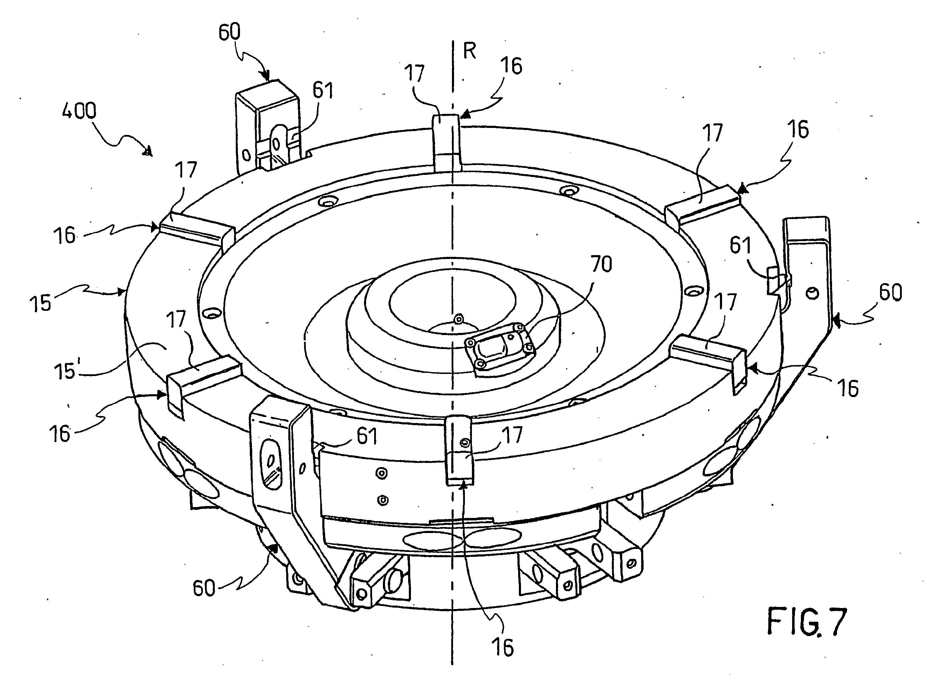

With reference to Fig. 7, a third exemplary chuck is described, which is generally designated with numeral 400, in accordance with the present invention.

This chuck, similarly to the chuck in Fig. 1, comprises a support base 15 that can be rotated about a first reference axis R. The support base 15 results to be substantially orthogonal to the first reference axis R and comprises an annular structure having an upper face 15' on which orientation elements 16 are distributed, which are intended to be engaged, similarly to those described above with reference to Fig. 1 or Fig. 6, with the notches 13 associated with the blank wheel rim 1 thus allowing the latter to be centred on the chuck 400. In this third example, like in the other two described above, the orientation elements 16 extend in respective radial directions developing parallel to the support base 15 and being centred on the first reference axis R.

In the third example described herein, the orientation elements 16 are nine and comprise a plurality of orientation elements 17 that are fixed relative to the support base 15 and a plurality of elements 60 locking the wheel rim to be machined.

As shown in Fig. 7, the fixed orientation elements 17 are six and have respective radial directions having angular distances of 60° from each other. The locking elements 60 are three and have respective radial directions having an angular distance of 120° from each other. Particularly, it should be noted that each movable orientation element 60 is comprised between two fixed orientation elements 17.

Still in accordance with the third exemplary embodiment, the fixed orientation elements 17 advantageously comprise ribs in relief on the upper face 15' of the support base 15. Similarly to what has been stated for the exemplary embodiments above, the ribs have such a profile and length as to allow, alternatively to the wheel rim 1, the chuck 300 to be engaged with the second orientation means associated with at least one further wheel rim of a different type from the wheel rim 1 and that can be centred on the chuck.

With reference to the locking elements 60 in Fig. 7, it should be noted that each of them comprises a housing 61 (shown in the figure), which is suitable to contain a respective holding block (not shown in the figure). It should be noted that, to the purpose of locking the wheel rim 1 on the chuck 400, the holding blocks are substantially suitable for grasping and locking the blank wheel rim. It should be further observed that, advantageously, each housing 60 is suitable for containing holding blocks having different sizes according to the diameter of the blank wheel rim that an operator intends to rotate for subsequent machining.

Finally, it should be noted that also in this third example, each rib 17 is housed in a further seat 24 provided with a spring (not shown in the figure), which is suitable to apply a thrust on the rib 17 for facilitating the engagement of the latter with the respective notch 13 of the wheel rim. Each spring is provided with the position sensor therein, the function thereof having been described and stated above. It should be observed that not all springs are necessarily provided with the respective sensor, but only some of them.

It should be further noted that, in Fig. 7, the transmitter is shown, designated with numeral 70, which is suitable to provide, when the wheel rim 1 is properly positioned on the chuck 400, the second electric control signal to the receiving antenna that can be positioned, for example, outside the chuck 400 and operatively connected to the PLC controller. The PLC controller, on the basis of the second electric signal received, signals the proper positioning of the wheel rim on the chuck and is capable of controlling the continuation of the operations required for machining the wheel rim 1.

It should be observed that the chuck 400 is also provided with fitting means, known per se to those skilled in the art, for mounting the same to a lathe or other machine for rotation about the first reference axis R.

In a further embodiment, not shown in the figures, a chuck according to the invention can comprise, as a variant of the chuck described above with reference to Fig. 7, locking elements in which each housing results to be as one piece with the respective holding block. These locking elements are actual jaws that can be rotated between a first position in which the wheel rim is allowed to be positioned and centred on the chuck and a second position in which a free end of the jaw is engaged with a wheel rim portion such as to prevent the latter to shift relative to the chuck. This chuck, according to this variant embodiment, can mount jaws having different sizes (in terms of length of the free end) such that it can be used with wheel rims having different radial sizes.

According to further exemplary embodiments of the chuck alternative to those described above, the ribs (or other suitable orientation elements) may have a lower length than that indicated above by way of example, though being radially movable such as to cover a radial length such as to allow the ribs to be engaged with orientation means associated with different types of wheel rims.

In other words, to the purpose of the present invention, by "length along which the rib (or other orientation element) extends" is meant both the actual length of this element and the length covered by the element due to the radial mobility thereof.

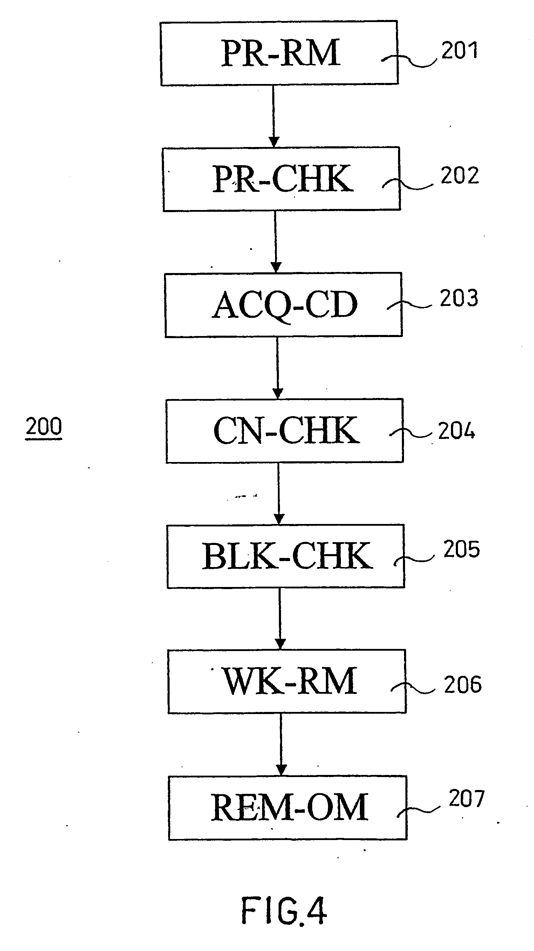

With reference to the block diagram as illustrated in Fig. 4, a particularly preferred embodiment will be described herein below of a process or method for manufacturing 200 a wheel rim in accordance with the present invention, and particularly to the first exemplary embodiment described herein.

The manufacturing process 200 includes, preferably and in a non-limiting manner, a first step of providing 201 the blank wheel rim (PR-RM) described above.

Preferably, the step of providing 201 the blank wheel rim (PR-RM) comprising a conventional moulding operation, such as mould casting, to obtain the blank wheel rim 1.

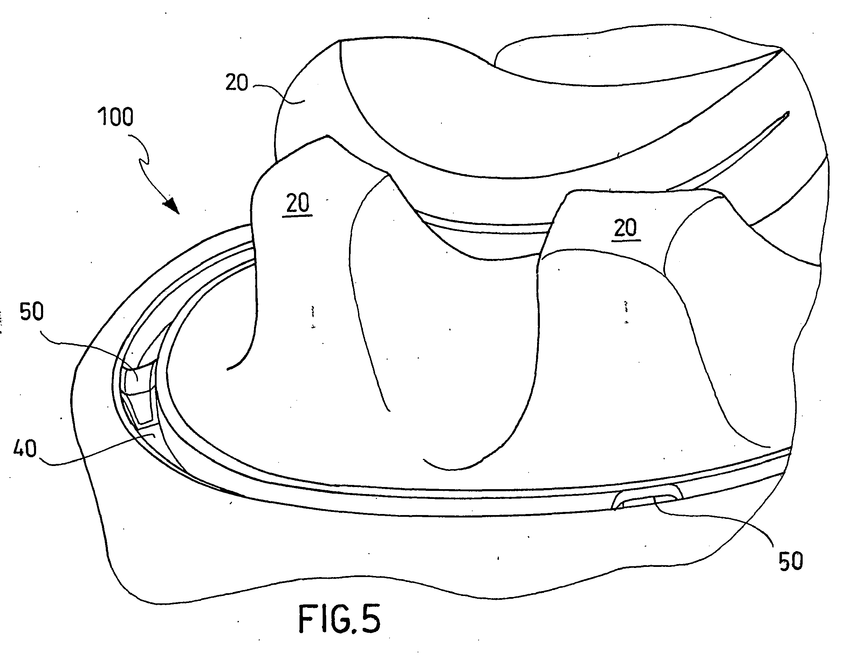

Particularly, with reference to Fig. 5, an example of mould 100 for use in the moulding operation is now illustrated. The mould 100 comprises shaping elements 20 extending from a central portion of said mould and a groove 40 defined in a peripheral portion of the mould 100. It should be observed that a plurality of partition walls 50 is distributed within the groove 40. The groove 40 and the plurality of partition walls 50 correspond to the peripheral edge 4 and notches 13 of the blank wheel rim 1, respectively. The shaping elements 20 are such as to define within the disc 2 all the structural and aesthetic elements of the wheel rim as described above.

As the moulding operation is an operation by now belonging to the state of the art, it will not be further detailed herein. By "moulding operation" is meant machining a wheel rim preform (for example, and in a non-limiting manner, being obtained by mould casting) in order to obtain the hot plastic deformation of this preform. Alternatively, a low-pressure metal injection technique can be used directly within the mould.

The process 200 then provides a step of providing 202 the chuck (PR-CHK) for the centring having all the structural characteristics as described above.

Preferably, though in a non-limiting manner, to said step of providing 202 the chuck there follows the acquisition (step 203, ACQ-CD) by the control unit (PLC controller) of a piece of information I to be associated with an identification code of the wheel rim. In greater detail, to acquire the piece of information I, a scan unit, operatively connected to the control unit, carries out an electron scan of the wheel rim 1 and the control unit associates an identification code of the wheel rim with said piece of information I. Alternatively to the electron scan, the piece of information I can be acquired by visual recognition or electronic (optical) reading of the wheel rim identification code. Alternatively to the types of acquisition described above, the identification code of the wheel rim can be manually typed by an operator. Typically, the identification code of a vehicle wheel rim is the so-called PA-NUMBER to which all the characteristics of a type of wheel rim (diameter, radius, number of holes, etc.) are associated. The PA-NUMBER code is simply a rim-identification code that is related to the design of the wheel rim. For example, in the case where a wheel rim is required by a customer with a specific design number, the identification code associated therewith is a so-called production code, which allows identifying and recognizing the wheel rim among the others.

The wheel rim 1 is then centred on the chuck 14 (step 204, CN-CHK) by the orientation elements 16 being engaged with the notches 13 defined on the blank wheel rim 1. Particularly, it should be observed that by "centring the wheel rim on the chuck" is meant the alignment of the second reference axis S with the first reference axis R. This is advantageously ensured by orientation elements being defined on the chuck 14 which have radial direction not aligned to each other and consequently by the respective notches being correspondingly defined on the edge of the wheel rim.

Preferably, prior to centring 204, the process 200 provides for the adjustment of the movable orientation elements 18 and consequently the locking means 25 associated therewith as a function of the radius of wheel rim 1. This operation is carried out by the control unit which retrieves this piece of information from the PA-NUMBER.

After this operation, the wheel rim is moved via mechanical means (such as a robot or mechanical arm), which orientate the wheel rim such that the radial direction of the notches 13 and the second reference axis S result aligned with the radial directions of the orientation elements 16 (ribs) and with the first reference axis R, which are associated to the chuck 14, respectively. It should be observed that after this operation has been carried out, the stop elements 25' of the chuck are in such a position as to allow the wheel rim 1 to be positioned and centred. Furthermore, the wheel rim is engaged with the chuck such as to have a geometric coupling between the notches 13 of the wheel rim and the ribs 17 and 23.

Thereafter, the manufacturing process 200 comprises locking (step 205, BLK-CHK) the blank wheel rim 1 to the chuck 14. In greater detail, the stop elements 25' are rotated to be engaged with a portion of the wheel rim 1 such as to fasten the movement thereof along the first reference axis R. It should be observed that the combination of said engagement between stop element and wheel rim portion and the thrust applied by the resilient means on the ribs 17 and 23, to facilitate the engagement with the notches, optimise the locking of the wheel rim to the chuck. This aspect is advantageous, as the grip between the chuck and the wheel rim is safer, and the rotary movement (torque) is transferred from the chuck to the wheel rim in more reliable manner.

After the wheel rim has been locked to the chuck (step 205, BLK-CHK), the blank wheel rim is worked (step 206, WK-RM). Particularly, said step 206 may be, preferably, a stock removing machining, known per se, by means of a first turning operation.

After the machining step 206 has been completed, the process 200 preferably provides the blank wheel rim 1 to be separated from the chuck 14, and then, with reference to the diagram in Fig. 5, the blank wheel rim 1 to be removed from the notches 13 (step 207, REM-OM). It should be noted that, advantageously, the separation of the blank wheel rim 1 from the chuck 14 is carried out by means of the grip of the wheel rim at suitable housings formed on the wheel rim during the first lathe machining. In greater detail, after the separation and removal steps, the wheel rim is provided to be fixed to a further chuck, via fixing means, such as a collet, which are suitable to be engaged with the hub 10 of the wheel rim 1 and a further stock removing machining by means of a second turning operation, known per se to those skilled in the art, to the purpose of removing the peripheral edge 4 and other parts to be removed, which are located in those areas that could not be reached during the first turning.

Advantageously, the manufacturing process 200 preferably includes, after the notches 13 have been removed, a drilling operation on the wheel rim disc, in order to provide the holes allowing the wheel rim to be connected to a vehicle axis, and the valve hole. Furthermore, the manufacturing process 200 preferably includes subsequent operations known to those skilled in the art of vehicle wheel rims, such as, for example, finishing operations on the annular portion of the wheel rim, burnishing (i.e. polishing) and painting operations on the wheel rim.

It should be observed that the exemplary chucks described herein and the process according to the invention allow machining vehicle wheel rims using the same equipment for different types of wheel rims. The versatility and universality of said equipment is due to the fact that the chuck according to the invention is provided with such orientation elements (movable and/or fixed) that extend in respective radial directions by a length allowing, however, the engagement with the notches defined on the edge of different types of wheel rims. Furthermore, the locking means can be radially adjusted such as to correspond to different sizes of a wheel rim radius. In addition, by defining the first orientation means (notches) on a peripheral edge that is joined to the wheel rim disc, the centring operation is independent of the inner configuration of the disc (for example, distribution and number of spokes, distribution and number of through holes).

When used in a manufacturing process of vehicle wheel rims, a chuck as described herein considerably improves the performance of said process. In fact, the time for carrying out the machining steps required for adjusting the chuck, centring and locking the wheel rim, are shorter, and consequently a greater number of wheel rims, even of different sizes, can be mass-produced in a shorter time. Again, as the adjusting step is automated (the radially movable orientation means are driven by a control unit), manual preliminary operations are not required for the chuck (or more generally, the lathe) to be arranged for machining a wheel rim of a different size from the one that has been machined before. What has been described herein also allows obtaining a considerable advantage in terms of costs, since it is no longer required to have more machines for each type of wheel rim, and in the case of smaller equipment number, less labour can be used for registering this equipment as a function of the piece to be centred and locked for subsequent machining.

Obviously, to the chuck (in accordance with one of the examples described above) and manufacturing process according to the present invention, those skilled in the art, aiming at satisfying contingent and specific requirements, may carry out a number of modifications and variations, all being however contemplated within the scope of protection of the invention, such as defined in the annexed claims.

## Claims

1. A chuck (14; 300; 400) for centring a blank wheel rim (1) comprising:
- a support base (15) for the wheel rim, which can be rotated about a first reference axis (R),
- at least two orientation elements (16) associated with said base (15) which are intended to be engaged with first orientation means (13) associated with the wheel rim to allow the wheel rim to be centred by substantially aligning a second reference axis (S) of the wheel rim with the first reference axis (R) of the base, each of said at least two orientations elements (16) is such as to be extended in a respective radial direction having the centre on the first reference axis (R) by a length that allows, alternatively, the same to be engaged with second orientation means associated with a further wheel rim that is of a different type from said wheel rim (1) and can be centred on the chuck (14; 300; 400), at least one of said orientation elements (16) is a rib (17, 23; 17) in relief relative to said support base (15) and suitable to be snugly coupled with a respective notch (13) having a matching profile which is provided on a peripheral edge (4) of the wheel rim (1),
said chuck (14; 300; 400) being **characterised in that** said rib (17, 23; 17) is housed in a seat (24) provided with such elastic means as to apply a thrust on the rib (17, 23; 17) to facilitate the engagement of the latter with the respective notch (13).

2. The chuck (14; 300; 400) according to claim 1, wherein said support base (15) comprises an annular structure (15) having an upper face (15') on which said at least two orientation elements (16) are distributed.

3. The chuck (14; 300; 400) according to claim 1, wherein the support base (15) further comprises means for locking the wheel rim (25; 60) to the support base (15).

4. The chuck (14; 300) according to claim 3, wherein said locking means (25) comprise at least one stop element (25') that can be rotated between a first position in which it allows the wheel rim (1) to be positioned and centred on the support base (15) and a second position in which it is engaged with a portion of the wheel rim (1) such as to be prevented from shifting along the first reference axis (R).

5. The chuck (14) according to claim 4, wherein said at least one stop element (25') is movable in the radial direction.

6. The chuck (14; 300) according to claim 1 and 5, wherein said at least one stop element (25') is mounted to said sliding saddle (22).

7. The chuck (14) according to at least one of the preceding claims, wherein said at least two orientation elements (16) comprise a first plurality of fixed elements (17) and a second plurality of radially movable elements (18).

8. The chuck (14) according to claim 6, wherein said first (17) and said second (18) plurality comprise three orientation elements, respectively.

9. The chuck (14; 300; 400) according to claim 1, wherein said elastic means are provided with at least one position sensor for generating, when the wheel rim (1) is properly positioned on the chuck, a first electric signal indicating that said resilient means have been pressed, said first electric signal being provided to a transmitter (70) with which the chuck is provided.

10. The chuck (14; 300; 400) according to claim 9, wherein said transmitter (70) is suitable to provide, based on said first electric signal, a second electric control signal to a receiving antenna that is operatively associated with a control unit for said chuck, said control unit being capable of moving and positioning the locking means (25) as a function of a wheel rim radius based on said second electric control signal.

11. A process (200) for manufacturing a vehicle wheel rim (1) including the operations of:
a) providing (201) a blank wheel rim (1) provided with first orientation means (4, 13);
b) providing (202) a chuck (14; 300; 400) for centring, which is provided according to at least one of the preceding claims;
c) acquiring (203), by means of a scan unit, a piece of information that can be associated with an identification code of the wheel rim (1);
d) centring (204) the blank wheel rim (1) on the chuck (14; 300; 400) by means of said at least two orientation elements (16) being engaged with the first orientation means(4, 13);
e) locking (205) the blank wheel rim (1) to the chuck (14; 300; 400);
f) working (206) the blank wheel rim (1).

12. The process (200) according to claim 11, further comprising, after the machining step (206), a step of separating the machined wheel rim (1) from the chuck (14; 300; 400) and a step of removing (207) the first orientation means (4, 13).

13. The process (200) according to claim 11, wherein at least one of the orientation elements is radially movable (18) and is mounted to the saddle (22) sliding within the seat (19) with which the chuck (14) is provided, and the centring step (204) further comprises an operation of adjusting said at least one movable orientation element (18) as a function of the piece of information.

14. The process (200) according to claim 11, wherein the step of centring (204) includes a step of moving the wheel rim by means of mechanical moving means which orientate the wheel rim (1) as a function of the piece of information.

15. The process (200) according to claim 13, wherein the operation of adjusting said at least one movable orientation element (18) as a function of the piece of information is carried out by the control unit for moving and positioning said at least one movable element (18) as a function of the piece of information.

## Patentansprüche

1. Spannfutter (14; 300; 400) zum Zentrieren eines Radfelgenrohlings (1), umfassend:
- eine Trägerbasis (15) für die Radfelge, die um eine erste Referenzachse (R) gedreht werden kann,
- zumindest zwei Orientierungselemente (16), die der Basis (15) zugeordnet sind und zum Eingriff mit ersten Orientierungsmitteln (13) dienen, die der Radfelge zugeordnet sind, um ein Zentrieren der Radfelge durch angenäherte Ausrichtung einer zweiten Referenzachse (S) der Radfelge zur ersten Referenzachse (R) der Basis zu erlauben, wobei jedes der zumindest zwei Orientierungselemente (16) so ist, dass es sich in einer jeweiligen radialen Richtung, die das Zentrum auf der ersten Referenzachse (R) hat, um eine Länge erstreckt, die alternativ erlaubt, dass es mit zweiten Orientierungsmitteln in Eingriff steht, die einer weiteren Radfelge zugeordnet sind, deren Typ sich von der Radfelge unterscheidet, und die auf dem Spannfutter (14; 300; 400) zentriert werden kann, wobei zumindest eines der Orientierungselemente (16) eine Rippe (17, 23; 17) in Relief relativ zu der Trägerbasis (15) ist und zur engen Kopplung mit einer jeweiligen Kerbe (13) geeignet ist, die ein passendes Profil hat, das auf einem Umfangsrand (4) der Radfelge (1) vorgesehen ist,
wobei das Spannfutter (14; 300; 400) **dadurch gekennzeichnet, ist, dass** die Rippe (17; 23, 17) in einem Sitz (24) aufgenommen ist, der mit solchen elastischen Mitteln versehen ist, dass auf die Rippe (17, 23; 17) ein Druck ausgeübt wird, um den Eingriff der letzteren mit der jeweiligen Kerbe (13) zu erleichtern.

2. Das Spannfutter (14; 300; 400) nach Anspruch 1, worin die Trägerbasis (15) eine ringförmige Struktur (15) mit einer Oberseite (15') aufweist, auf der die zumindest zwei Orientierungselemente (16) verteilt sind.

3. Das Spannfutter (14; 300; 400) nach Anspruch 1, worin die Trägerbasis (15) ferner Mittel zum Arretieren der Radfelge (26; 60) auf der Trägerbasis (15) aufweist.

4. Das Spannfutter (14; 300) nach Anspruch 3, worin die Arretierungsmittel (25) zumindest ein Anschlagelement (25') aufweisen, das zwischen einer ersten Stellung, in der es die Positionierung und Zentrierung der Radfelge (1) auf der Trägerbasis (15) erlaubt, und einer zweiten Stellung, in der es mit einem Abschnitt der Radfelge (1) in Eingriff tritt, um eine Verschiebung entlang der ersten Referenzachse (R) zu verhindern, gedreht werden kann.

5. Das Spannfutter (14) nach Anspruch 4, worin das zumindest eine Anschlagelement (25') in der radialen Richtung bewegbar ist.

6. Das Spannfutter (14; 300) nach Anspruch 1 und 5, worin das zumindest eine Anschlagelement (25') auf dem Gleitsattel (22) angebracht ist.

7. Das Spannfutter (14) nach zumindest einem der vorhergehenden Ansprüche, worin die zumindest zwei Orientierungselemente (16) eine erste Mehrzahl von festen Elementen (17) und eine zweite Mehrzahl von radial bewegbaren Elementen (18) aufweisen.

8. Das Spannfutter (14) nach Anspruch 6, worin die erste (17) und die zweite (18) Mehrzahl jeweils drei Orientierungselemente aufweisen.

9. Das Spannfutter (14; 300; 400) nach Anspruch 1, worin die elastischen Mittel mit zumindest einem Positionssensor versehen sind, um, wenn die Radfelge (1) richtig auf dem Spannfutter angeordnet ist, ein erstes elektrisches Signal zu erzeugen, das anzeigt, dass die elastischen Mittel unter Druck gesetzt worden sind, wobei das erste elektrische Signal zu einem Sender (70) geliefert wird, mit dem das Spannfutter versehen ist.

10. Das Spannfutter (14; 300; 400) nach Anspruch 9, worin der Sender (70) geeignet ist, um basierend auf dem ersten elektrischen Signal ein zweites elektrisches Steuersignal zu einer Empfangsantenne zu liefern, die einer Steuereinheit für das Spannfutter betriebsmäßig zugeordnet ist, wobei die Steuereinheit in der Lage ist, die Arretierungsmittel (25) als Funktion eines Radfelgenradius basierend auf dem zweiten elektrischen Steuersignal zu bewegen und zu positionieren.

11. Verfahren (200) zur Herstellung einer Fahrzeugradfelge (1), welches die Operationen enthält:
a) Bereitstellen (201) eines Radfelgenrohlings (1), das mit ersten Orientierungsmitteln (4, 13) versehen ist;
b) Bereitstellen (202) eines Spannfutters (14; 300; 400) zum Zentrieren, das gemäß zumindest einem der vorhergehenden Ansprüche vorgesehen ist;
c) Erfassen (203) mittels einer Abtasteinheit, eines Informationsstücks, das einem Identifizierungscode der Radfelge (1) zugeordnet werden kann;
d) Zentrieren (204) des Radfelgenrohlings (1) auf dem Spannfutter (14; 300; 400) mittels den zumindest zwei Orientierungselementen (16) in Eingriff mit den ersten Orientierungsmitteln (4, 13);
e) Arretieren (205) des Radfelgenrohlings (1) auf dem Spannfutter (14; 300; 400);
f) Bearbeiten (206) des Radfelgenrohlings (1).

12. Das Verfahren (200) nach Anspruch 11, das ferner, nach dem Bearbeitungsschritt (206) umfasst:
einen Schritt der Trennung der bearbeiteten Radfelge (1) von dem Spannfutter (14; 300; 400) und einen Schritt des Entfernens (207) der ersten Orientierungsmittel (4, 13).

13. Verfahren (200) nach Anspruch 11, worin zumindest eines der Orientierungselemente radial bewegbar ist (18) und an dem Sattel (22) angebracht ist, der in dem Sitz (19), mit dem das Spannfutter (14) versehen ist, gleitet, und der Zentrierungsschritt (204) ferner eine Operation zum Einstellen des zumindest einen beweglichen Orientierungselements (18) als Funktion des Informationsstücks umfasst.

14. Das Verfahren (200) nach Anspruch 11, worin der Schritt des Zentrierens (204) einen Schritt des Bewegens der Radfelge mittels mechanischen Bewegungsmitteln enthält, welche die Radfelge (1) als Funktion des Informationsstücks orientieren.

15. Das Verfahren (200) nach Anspruch 13, worin die Operation des Einstellens des zumindest einen beweglichen Orientierungselements (18) als Funktion des Informationsstücks durch die Steuereinheit ausgeführt wird, um das zumindest eine bewegliche Element (18) als Funktion des Informationsstücks zu bewegen und zu positionieren.

## Revendications

1. Mandrin (14 ; 300 ; 400) destiné à centrer une ébauche de jante de roue (1) comportant :
- une base de support (15) pour la jante de roue, qui peut être entraînée en rotation autour d'un premier axe de référence (R),
- au moins deux éléments d'orientation (16) associés à ladite base (15) qui sont prévus pour être engagés avec des premiers moyens d'orientation (13) associés à la jante de roue afin de permettre à la jante de roue d'être centrée en alignant sensiblement un deuxième axe de référence (S) de la jante de roue avec le premier axe de référence (R) de la base, chacun desdits au moins deux éléments d'orientation (16) est prévu de façon à s'étendre dans une direction radiale respective ayant le centre sur le premier axe de référence (R) sur une longueur qui permet, alternativement, à celui-ci d'être engagé avec des deuxièmes moyens d'orientation associés à une autre jante de roue qui est d'un type différent de ladite jante de roue (1) et peut être centrée sur le mandrin (14 ; 300 ; 400), au moins un desdits éléments d'orientation (16) est une nervure (17, 23 ; 17) en relief par rapport à ladite base de support (15) et prévue pour être reliée de manière ajustée avec une encoche respective (13) ayant un profil correspondant qui est prévu sur un bord périphérique (4) de la jante de roue (1),
ledit mandrin (14 ; 300 ; 400) étant **caractérisé en ce que** ladite nervure (17, 23 ; 17) est logée dans un siège (24) pourvu de moyens élastiques qui appliquent une poussée sur la nervure (17, 23 ; 17) afin de faciliter l'engagement de cette dernière avec l'encoche respective (13).

2. Mandrin (14 ; 300 ; 400) selon la revendication 1, dans lequel ladite base de support (15) comporte une structure annulaire (15) ayant une face supérieure (15') sur laquelle lesdites au moins deux éléments d'orientation (16) sont répartis.

3. Mandrin (14 ; 300 ; 400) selon la revendication 1, dans lequel la base de support (15) comporte en outre des moyens destinés à bloquer la jante de roue (25 ; 60) sur la base de support (15).

4. Mandrin (14 ; 300) selon la revendication 3, dans lequel lesdits moyens de blocage (25) comportent au moins un élément d'arrêt (25') qui peut être tourné entre une première position dans laquelle il permet à la jante de roue (1) d'être positionnée et centrée sur la base de support (15) et une deuxième position dans laquelle il est engagé avec une partie de la jante de roue (1) de façon à être empêchée de se déplacer le long du premier axe de référence (R).

5. Mandrin (14) selon la revendication 4, dans lequel ledit au moins un élément d'arrêt (25') est mobile dans la direction radiale.

6. Mandrin (14 ; 300) selon la revendication 1 et 5, dans lequel ledit au moins un élément d'arrêt (25') est monté sur ladite sellette coulissante (22).

7. Mandrin (14) selon au moins une des revendications précédentes, dans lequel lesdits au moins deux éléments d'orientation (16) comportent une première pluralité d'éléments fixes (17) et une deuxième pluralité d'éléments radialement mobiles (18).

8. Mandrin (14) selon la revendication 6, dans lequel lesdites première (17) et deuxième (18) pluralités comportent trois éléments d'orientation, respectivement.

9. Mandrin (14 ; 300 ; 400) selon la revendication 1, dans lequel lesdits moyens élastiques sont pourvus d'au moins un capteur de position afin de générer, quand la jante de roue (1) est correctement positionnée sur le mandrin, un premier signal électrique indiquant que lesdits moyens élastiques ont été poussés, ledit premier signal électrique étant délivré à un émetteur (70) dont le mandrin est équipé.

10. Mandrin (14 ; 300 ; 400) selon la revendication 9, dans lequel ledit émetteur (70) est prévu pour délivrer, sur la base dudit premier signal électrique, un deuxième signal de commande électrique à une antenne de réception qui est associée de manière opérationnelle à une unité de commande pour ledit mandrin, ladite unité de commande étant capable de déplacer et de positionner les moyens de blocage (25) en fonction d'un rayon de jante de roue sur la base dudit deuxième signal de commande électrique.

11. Procédé (200) de fabrication d'une jante de roue de véhicule (1) comprenant les opérations consistant à :
a) prévoir (201) une ébauche de jante de roue (1) pourvue de premiers moyens d'orientation (4, 13) ;
b) prévoir (202) un mandrin (14 ; 300 ; 400) pour le centrage, qui est prévu selon au moins une des revendications précédentes ;
c) acquérir (203), au moyen d'une unité de balayage, une information qui peut être associée à un code d'identification de la jante de roue (1) ;
d) centrer (204) l'ébauche de jante de roue (1) sur le mandrin (14 ; 300 ; 400) au moyen desdits au moins deux moyens d'orientation (16) qui sont engagés avec les premiers moyens d'orientation (4, 13) ;
e) bloquer (205) l'ébauche de jante de roue (1) sur le mandrin (14 ; 300 ; 400) ;
f) usiner (206) l'ébauche de jante de roue (1).

12. Procédé (200) selon la revendication 11, comportant en outre, après l'étape d'usinage (206), une étape de séparation de la jante de roue usinée (1) du mandrin (14 ; 300 ; 400) et une étape de retrait (207) des premiers moyens d'orientation (4, 13).

13. Procédé (200) selon la revendication 11, dans lequel au moins un des éléments d'orientation est radialement mobile (18) et est monté sur la sellette (22) coulissant dans le siège (19) dont le mandrin (14) est pourvu, et l'étape de centrage (204) comporte en outre une opération d'ajustement dudit au moins un élément d'orientation mobile (18) en fonction de l'élément d'information.

14. Procédé (200) selon la revendication 11, dans lequel l'étape du centrage (204) comprend une étape de déplacement de la jante de roue à l'aide de moyens de déplacement mécaniques qui orientent la jante de roue (1) en fonction de l'élément d'information.

15. Procédé (200) selon la revendication 13, dans lequel l'opération d'ajustement dudit au moins un élément d'orientation mobile (18) en fonction de l'élément d'information est réalisée par l'unité de commande afin de déplacer et positionner ledit au moins un élément mobile (18) en fonction de l'élément d'information.
